# EUROPÄISCHE PATENTSCHRIFT

(11) **EP 3 465 817 B1**
(45) Veröffentlichungstag und Bekanntmachung des Hinweises auf die Patenterteilung: **06.05.2020**
(21) Anmeldenummer: 17710699.4
(22) Anmeldetag: 08.03.2017
(51) Int. Cl.: H01Q 1/32, H01Q 1/38, H01Q 21/29, H01Q 25/00, H01Q 21/00, H01Q 13/02, H01P 5/107

(54) **ANTENNENVORRICHTUNG FÜR EINEN RADARDETEKTOR MIT MINDESTENS ZWEI STRAHLUNGSRICHTUNGEN UND KRAFTFAHRZEUG MIT ZUMINDEST EINEM RADARDETEKTOR**
ANTENNA DEVICE FOR A RADAR DETECTOR HAVING AT LEAST TWO RADIATION DIRECTIONS, AND MOTOR VEHICLE HAVING AT LEAST ONE RADAR DETECTOR
DISPOSITIF D'ANTENNE POUR UN DÉTECTEUR DE RADAR AYANT AU MOINS DEUX DIRECTIONS DE RAYONNEMENT ET VÉHICULE AUTOMOBILE AYANT AU MOINS UN DÉTECTEUR DE RADAR

(30) Priorität: 07.06.2016 DE 102016007434
(43) Veröffentlichungstag der Anmeldung: 10.04.2019
(73) Patentinhaber: Audi AG, 85045 Ingolstadt (DE)
(72) Erfinder: KOCH, Niels, 85084 Reichertshofen (DE)
(86) Internationale Anmeldenummer: PCT/EP2017/055445
(87) Internationale Veröffentlichungsnummer: WO 2017/211472

(56) Entgegenhaltungen:
- DE-A1-102006 019 054
- DE-A1-102013 017 263
- US-A1- 2015 070 231

## Beschreibung

Die Erfindung betrifft eine Antennenvorrichtung für einen Radardetektor mindestens zwei Strahlungsrichtungen, wie er zum Beispiel in einem Kraftfahrzeug bereitgestellt werden kann. Zu der Erfindung gehört auch ein Kraftfahrzeug mit zumindest einem Radardetektor zum Detektieren oder Erfassen von Objekten in einer Umgebung oder in einem Innenraum des Kraftfahrzeugs.

Derzeit werden Radarsensoren oder Radardetektoren mit einfacher Strahlungscharakteristik verwendet. Das bedeutet, dass eine Radarantenne vorzugsweise in eine Hauptabstrahlrichtung sendet und aus dieser empfängt. Der Überwachungsbereich für eine Vielzahl von Radaranwendungen ist jedoch breiter, als ihn eine Radarantenne allein abdecken kann. Deshalb werden in der Regel zwei oder mehr als zwei unabhängige Radarantennen verwendet, die jeweils einen eigenen Winkelbereich abdecken, indem ihre Hauptabstrahlrichtungen in einem Winkel zueinander angeordnet sind. Hierdurch überlagern sich die beiden Strahlungscharakteristiken der Radarantennen zu einer breiteren Gesamtcharakteristik. In der Summe wird der gesamte Überwachungsbereich von den unterschiedlichen Radarantennen erfasst.

Um eine möglichst kompakte Antennenvorrichtung bereitzustellen, ist man bestrebt, die zur Abdeckung eines vorgegebenen Überwachungsbereichs oder Erfassungsbereichs nötigen Radarantennen auf einer einzelnen Leiterplatte oder Schaltungsplatine (PCB - Printed Circuit Board) anzuordnen. Bei Anordnung mehrerer Radarantennen auf einer einzelnen Leiterplatte wird diese allerdings unerwünscht groß. Dies verhindert, dass ein Radardetektor kleiner gebaut werden kann.

Umgekehrt ist bei gegebener Fläche einer Leiterplatte erwünscht, diese für möglichst viele Radarantennen, die in dieselbe Hauptabstrahlrichtung abstrahlen, zu verwenden, um hierdurch eine Ortsauflösung des Radardetektors zu verbessern oder zu vergrößern.

Die US 2015/0070231 A1 zeigt die Anordnung von zueinander orthogonalen substratintegrierten Hornantennen. Diese weisen einen gemeinsamen Einspeisepunkt auf, der jedoch mittels eines Umschalters auf jeweils nur eine Gruppe von Hornantennen mit gleicher Hauptstrahlrichtung geschaltet wird.

Der Erfindung liegt die Aufgabe zugrunde, eine Antennenvorrichtung bereitzustellen, bei welcher zumindest zwei Radarantennen mit unterschiedlichen Hauptabstrahlrichtungen kompakt zusammen bereitgestellt sind und nur ein Einspeisepunkt zur Anwendung kommt.

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figuren offenbart.

Die Erfindung umfasst eine Antennenvorrichtung für einen Radardetektor. Bei der Antennenvorrichtung sind zumindest zwei Radarantennen auf einer gemeinsamen Leiterplatte bereitgestellt. Während eine Antenne an der Vorderseite der Leiterplatte angeordnet ist, ist die zweite Antenne so ausgeführt, dass eine zur ersten Antenne verschiedene Abstrahlrichtung ausgebildet wird. Dies kann durch Ausformung einer Substrat integrierten Antennenstruktur erfolgen oder durch Anordnung einer Antenne auf der Rückseite der Leiterplatte. Es ist auch denkbar, sowohl eine Antenne auf der Vorderseite, der Rückseite und zugleich als substratintegrierte Antenne auszuformen. Alle Antennen werden durch nur eine Einspeisung versorgt.

Die Leiterplatte weist hierzu ein elektrisch isolierendes Substrat auf, an welchem an zwei gegenüberliegenden Seiten jeweils eine elektrisch leitfähige Schicht angeordnet ist. Die Schicht kann in der bekannten Weise zum Beispiel aus Kupfer als elektrischer Leiter gebildet sein. In der elektrisch leitenden Schicht einer ersten der Seiten, also zum Beispiel der Vorderseite, ist zumindest eine Hauptantenne ausgebildet oder bereitgestellt. Dies kann ein Dipol oder diverse Dipol-Ausführungsformen sein, oder eine Patch-Antenne mit ihren bekannten Ausführungsformen sein. Um eine Mindestreichweite des Radarsensors zu erreichen, sind Antennen-Arrays vorteilhaft.

Im Nachfolgenden soll anhand eines Patch-Antennenarrays die erfindungsmäßige Beschreibung erfolgen. Gleiches lässt sich auch auf Dipol-Arrays anwenden. Insbesondere sind mehrere Hauptantennen-Felder, insbesondere mehr als fünf Dipole oder Patch-Felder, vorgesehen.

Um in die Anordnung aus zumindest einer Hauptantenne eine weitere Radarantenne zu integrieren, ist erfindungsgemäß vorgesehen, dass neben der zumindest einen Hauptantenne jeweils eine substratintegrierte Antennenstruktur bereitgestellt ist. Mit "substratintegriert" ist gemeint, dass die Antennenstruktur innerhalb des Leiterplattenmaterials (d.h. des Substrats) ausgeformt ist. Insbesondere ist eine substratintegrierte Hornantennenstruktur vorgesehen sein. Mit einer substratintegrierten Hornantennenstruktur ist ein Hornstrahler gemeint. Eine typische klassische Hornantenne ist aus einem metallischen Hohl-Wellenleiter mit trichterförmiger Öffnung gebildet. Bei einer substratintegrierten Hornantenne wird die Hornantenne durch elektrische Verbindung der ober- und Unterseite der elektrischen Leiters hergestellt. Typischerweise werden bei Leiterplatten die obere- und untere Leiterschicht durch Einbringung von Durchkontaktierungen (VIAs) oder galvanische Brücken erreicht. Im einfachsten Fall wird ein Schlitz in das Substrat gefräst und z.B. mittels galvanischer Verfahren eine elektrische Verbindung zwischen dem oberen Leiter und dem unteren Leiter hergestellt. Es entsteht eine elektrische Brücke zwischen den Leiterschichten. Ordnet man diese elektrisch leitenden Brücken so an, das sie einem Hohlleiter für die Wellenlänge des für die Radarantenne interessierten Bereichs entspricht und führt diese Brücken zum Rand des Substrats, wird sich eine eingespeiste elektromagnetische Welle spätestens an der Substratkante in den Freiraum ablösen und damit die Antennenstruktur als Antenne wirken. Führt man den Wellenleiter aus elektrischen Brücken zusätzlich vor dem Substratrand in einem Winkel auseinander, bildet man einen Hornstrahler nach. Diese Trichterform legt in der bekannten Weise die Abstrahlcharakteristik und die Empfangscharakteristik des Hornstrahlers fest. In Summe erhält man einen substratintegrierte Hornantenne mit Wellenleitereinspeisung.

Verwendet man anstatt der galvanischen Brücken Durchkontaktierungen, die meist mittels Durchgangslochbohrung oder Sacklochbohrung und anschließender galvanischer Bearbeitung zu einem elektrisch leitendem VIA werden, bestimmt die Lochgröße und der Abstand die Wellenleiterqualität. Ob die elektrisch leitenden VIAs vollständig oder nur an den Rändern elektrisch leitend sind, ist unerheblich. Beide Ausführungsformen sind möglich. Aus Erfahrung sind kleine Bohrungen und geringstmögliche Abstände zwischen den Bohrungen vorteilhaft. Man kann die gefrästen Brücken mit den Löchern kombinieren, so dass Kurven, Stufen und komplexe Wegeführungen des Wellenleiters von der Einspeisung bis zum Rand des Substrats möglich werden.

So ist es auch möglich, das ausgebildete Horn einer Hornantennenstruktur als gestuftes Horn (corrugated) auszuführen, um Nebenkeulen in der Strahlungscharakteristik zu unterdrücken.

Ferner ist es auch möglich, eine Schlitzantenne als substratintegrierte Antennenstruktur auszuformen. Dazu ist der substratintegrierte Wellenleiter ebenfalls an den Rand des Substrats zu führen. Im Gegensatz zum Hornstrahler mit auseinanderlaufenden Wellenleiterstruktur zum Rand hin, wird bei einem Schlitzstrahler die Wellenleiterstruktur am Rand soweit geschlossen, dass nur noch eine der Betriebswellenlänge entsprechende Öffnung oder Spalt bleibt.

Ob das Substrat aus mehreren oder nur aus einer Lage ausgeführt wird, ist unerheblich, solange die Gesamtdicke mit der Betriebswellenlänge in Einklang steht. Um einen guten Wellenleiter auszuformen, ist mindestens 1/2*Betriebswellenlänge/Quadratwurzel(Dielektrizitätskonstante des Substrats) in Höhe und Breite auszuformen. Als bevorzugte Betriebsfrequenzen sind Frequenzen größer als 10 GHz (<3 cm Betriebswellenlänge) vorgesehen.

Die Einspeisung der Hauptantenne auf der ersten Seite oder Vorderseite des Leiterplattenmaterials kann in bekannter Weise ausgeformt seine. Eine Patch-Antenne beispielsweise wird über einen Mikrostreifenleiter auf der Oberseite des Substrats mit elektromagnetischer Energie gespeist. Eine Dipol kann über eine Finleitung auf der Vorderseite gespeist werden.

Um die Einspeisung in den Wellenleiter der substratintegrierten Antennenstruktur zu erreichen, wird bevorzugt ein Sackloch mit galvanischer Voll- oder Teilbefüllung an der Stelle eingebracht, an der sich die Speisleitung der Hauptantenne mit dem substratintegrierten Wellenleiter kreuzt. Die Einkopplung erfolgt in bekannter Weise und Methodik, wie man in einen Hohlwellenleiter (Waveguide) einkoppeln würde, entweder über eine kleine Öffnung als Strahlungskopplung oder als Koaxial-Einspeisung. Um eine gewisse Gewichtung der Strahlungsenergie der Hauptantenne zur ausgeformten, substratintegrierten Antennenstruktur zu erreichen, kann auch ein 6db, 10dB, 20dB Koppler bzw. jeder beliebiger Kopplungsfaktor an der Einspeisung der ersten Antenne zur Anwendung kommen.

Ebenso kann man mit einer Antenne auf der zweiten Seite oder Rückseite der Leiterplatte verfahren, die durch Kopplung der Einspeisung der Vorderseite miterregt wird.

Möchte man eine quasi-360° (mehr als 300°) rundum Erfassung erreichen, führt man die substratintegrierten Wellenleiter zu allen Rändern des Substrats und formt dort Horn- oder Schlitzantennen aus und fügt der Hauptantenne auf der Vorderseite, eine weitere auf der Rückseite hinzu. Alle Antennen werden durch das selbe Speisenetzwerk der Hauptantenne gespeist.

Um eine Anpassung an 50 Ohm im gemeinsamen Einspeisepunkt zu erhalten, werden die einzelnen Antennen bevorzugt hochohmig ausgeführt. Erregt man eine Patchantenne an seiner Strahlungskante, sind 200 bis 250 Ohm Eingangsimpedanz möglich. Ebenso kann der substratintegrierte Wellenleiter an der Stelle eingespeist werden, bei dem sich 200 Ohm Impedanz ergeben. Bei 4x200 Ohm ergibt sich an der gemeinsamen Einspeisung dann die gewünschten 50 Ohm. Alternativ kann über eine Impedanztransformation jede beliebige Impedanz erzeugt und zusammengeschaltet werden, die für die jeweilige Ausführungsform und Anwendung vorteilhaft ist.

Jede substratintegrierte Antennenstruktur umfasst somit die folgenden Komponenten. Es sind mehrere in dem Substrat ausgebildete oder bereitgestellte Aussparungen (Schlitze und/oder Löcher) vorgesehen, die zu einem Hohlleiter oder Wellenleiter angeordnet sind. Eine durch die elektrisch leitfähige Schicht einer der beiden Seiten der Leiterplatte gebildete Einspeiseleitung für die Antennenstruktur ist dazu eingerichtet, eine elektromagnetische Welle in die substratintegrierte Antennenstruktur einzuspeisen.

Durch die Erfindung ergibt sich der Vorteil, dass auf einer gemeinsamen Leiterplatte eine erste Radarantenne als Hauptantenne und neben jeder Hauptantenne jeweils eine substratintegrierte Antennenstruktur einer zweiten Radarantenne bereitgestellt werden können, ohne dass hierzu die Patch-Felder in einem größeren Abstand zueinander angeordnet werden müssten als ohne die Hornantennenstrukturen. Jede Hornantennenstruktur verwendet einen Bereich oder Platz in der Leiterplatte, der ohnehin nicht zum Bereitstellen der Hauptantenne benötigt wird.

Wie bereits ausgeführt, befindet sich die zumindest eine Hauptantenne auf der ersten Seite des Substrats und optional auf der zweiten Seite des Substrats. Sie kann dort in an sich bekannter Weise mittels einer Ätztechnik zum Ausbilden von Leiterbahnen erzeugt werden. Erfindungsgemäß befindet sich auch jede Speiseleitung der zumindest einen Antennenstruktur auf der ersten Seite. Hierbei ist vorgesehen, dass jede Speiseleitung mit einer durch die erste Schicht ausgebildeten Zuleitung für die zumindest eine Hauptantenne verbunden ist. Alternativ dazu kann die Zuleitung der Hauptantenne zugleich auch die Speiseleitung der Antennenstruktur sein. Mit anderen Worten wird jede Hauptantenne zusammen mit ihrer zugehörigen Antennenstruktur über ein und dieselbe Zuleitung versorgt. Hierdurch ergibt sich der Vorteil, dass über das zumindest eine Patch-Feld einerseits und die zumindest eine Antennenstruktur andererseits synchron gesendet und empfangen wird. Es ist keine aufwendige Koordination nötig.

Zu der Erfindung gehören vorteilhafte Weiterbildungen, durch deren Merkmale sich zusätzliche Vorteile ergeben.

Bei den Aussparungen jeder Antennenstruktur ist bevorzugt vorgesehen, dass deren Längserstreckungsrichtungen, d.h. die Verlaufsrichtung oder Ausrichtung der Aussparungen, parallel zueinander ausgerichtet sind. Hierdurch wirkt das in den Aussparungen angeordnete Material jeweils auf elektromagnetische Wellen der gleichen Polarisierung. Somit können die Aussparungen mit ihrem Material gemeinsam auf eine elektromagnetische Welle einwirken. Ein Abstand der Aussparungen zueinander ist bevorzug kleiner als 10 mm, insbesondere kleiner als 7mm. Zusätzlich oder alternativ dazu ist bevorzugt vorgesehen, dass die Aussparungen senkrecht zu einer Erstreckungsebene der Leiterplatte ausgerichtet sind. Mit anderen Worten sind die Längserstreckungsrichtungen der Aussparungen von der ersten Seite zur zweiten Seite (oder umgekehrt) ausgerichtet. Hierdurch blockiert das Material in den Aussparungen eine Ausbreitung einer elektromagnetischen Welle innerhalb des Substrats aus der Trichterform heraus.

Insgesamt ist bevorzugt vorgesehen, dass das in den Aussparungen angeordnete Material jeder Antennenstruktur als ein Wellenzaun oder Wellenkäfig auf über die Einspeiseleitung in die Trichterform eingespeiste Wellen des Wechselfeldes wirkt.

Bevorzugt sind die Aussparungen oder zumindest einige der Aussparungen, jeweils als eine sogenannte VIA-Durchgangsbohrung in dem Substrat bereitgestellt. Hierdurch ergibt sich der Vorteil, dass die Aussparungen mittels eines automatisierten Herstellungsprozesses erzeugt werden können. Das elektrisch leitfähige Material kann in den Aussparungen zum Beispiel mittels eines elektrodepositorischen, elektrolytischen Verfahrens eingebracht oder angeordnet werden.

Das in den Aussparungen angeordnete elektrisch leitfähige Material ist bevorzugt über die elektrisch leitfähige Schicht der ersten Seite und/oder der zweiten Seite elektrisch kurzgeschlossen. Hierdurch wird eine Sperrwirkung des elektrisch leitfähigen Materials für elektromagnetische Wellen in der Trichterform verstärkt oder vergrößert.

Während das zumindest eine Patch-Feld durch die elektrisch leitfähige Schicht der ersten Seite gebildet ist, ist die elektrisch leitfähige Schicht der zweiten Seite bevorzugt auch als Reflektor für jedes Patch-Feld bereitgestellt oder ausgestaltet. Hierdurch wird eine Hauptabstrahlrichtung des zumindest einen Patch-Felds für elektromagnetische Wellen senkrecht zu dem Patch-Feld zur ersten Seite hin festgelegt. Somit wird eine Leckstrahlung von der zweiten Seite weg verringert.

Durch die beschriebene Anordnung der Aussparungen einerseits und des zumindest einen Patch-Felds andererseits wird bevorzugt erreicht, dass eine jeweilige Hauptabstrahlrichtung jedes Patch-Feldes einerseits und eine jeweilige Hauptabstrahlrichtung jeder jeweils daneben angeordneten Antennenstruktur andererseits senkrecht zueinander oder zumindest in einem Winkelbereich von 70° bis 110° zueinander ausgerichtet sind. Durch diese Anordnung wird also mit dem zumindest einen Patch-Feld einerseits und mit der zumindest einen Antennenstruktur andererseits ein jeweils anderer Erfassungsbereich festgelegt, sodass eine kombinierte oder summierte Strahlungscharakteristik der Antennenvorrichtung (Gesamtcharakteristik) bereitgestellt wird, durch welche ein Erfassungsbereich abgedeckt werden kann, wie er zum Beispiel für einen Radardetektor eines Kraftfahrzeugs nötig ist.

Entsprechend ist erfindungsgemäß auch ein Kraftfahrzeug mit zumindest einem Radardetektor zum Erfassen von Objekten in einer Umgebung des Kraftfahrzeugs und/oder zum Erfassen von Objekten in einem Innenraum des Kraftfahrzeugs vorgesehen. Hierbei ist erfindungsgemäß der zumindest eine Radardetektor derart ausgestaltet, dass er jeweils eine Ausführungsform der erfindungsgemäßen Antennenvorrichtung aufweist.

Das erfindungsgemäße Kraftfahrzeug ist bevorzugt als Kraftwagen, insbesondere als Personenkraftwagen oder Lastkraftwagen, ausgestaltet.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs mit einem Radardetektor;
- Fig. 2: eine schematische Darstellung einer Ausführungsform einer erfindungsgemäßen Antennenvorrichtung, wie sie in dem Radardetektor von Fig. 1 bereitgestellt sein kann;
- Fig. 3: eine schematische Darstellung der Antennenvorrichtung von Fig. 2 mit einer Veranschaulichung einer Lage eines innenliegenden elektrisch leitfähigen Materials;
- Fig. 4: eine schematische Darstellung einer Draufsicht auf eine alternative Ausführungsform der Antennenvorrichtung;
- Figur 5: eine schematische Darstellung einer Schnittansicht der Antennenvorrichtung von Fig. 4; und
- Fig. 6: ein Diagramm mit einer Strahlungscharakteristik, wie sie durch die Antennenvorrichtungen bereitgestellt werden können.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

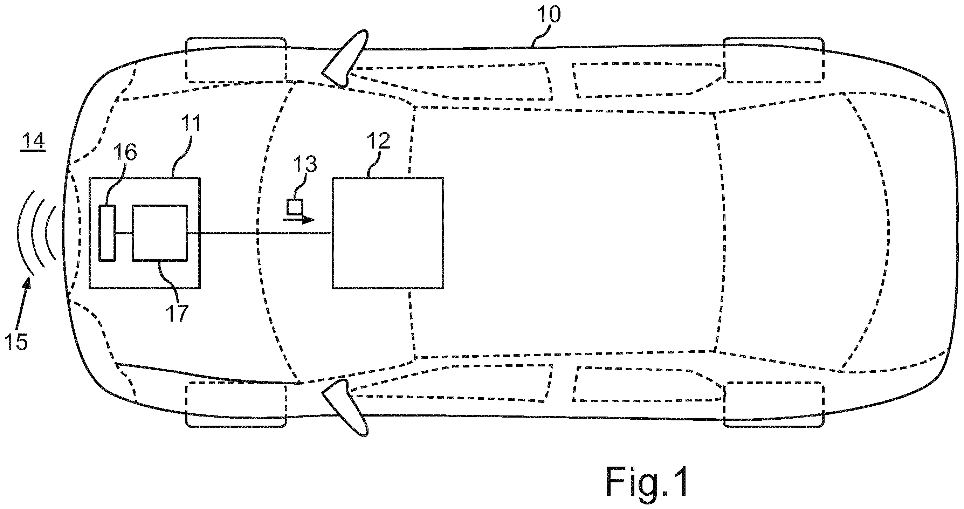

Fig. 1 zeigt ein Kraftfahrzeug 10, bei dem es sich beispielsweise um einen Personenkraftwagen handeln kann. Dargestellt sind ein Radardetektor 11 und ein Fahrerassistenzsystem 12. Das Fahrerassistenzsystem 12 kann von dem Radardetektor 11 Detektionssignale 13 empfangen, welche zum Beispiel Objekte in einer Umgebung 14 des Kraftfahrzeugs 10 beschreiben oder von deren Lage abhängig sind. Der Radardetektor 11 kann zum Aussenden von elektromagnetischen Wellen 15 in die Umgebung hinein und zum Empfangen von an den Objekten reflektierten Wellen eine Antennenvorrichtung 16 aufweisen. Eine Frequenz der elektromagnetischen Wellen 15 kann in einem Bereich von zum Beispiel 6 GHz bis 140 GHz liegen. Die Antennenvorrichtung 16 kann in bekannter Weise durch ein elektronisches Steuergerät 17 des Radardetektors 11 betrieben werden.

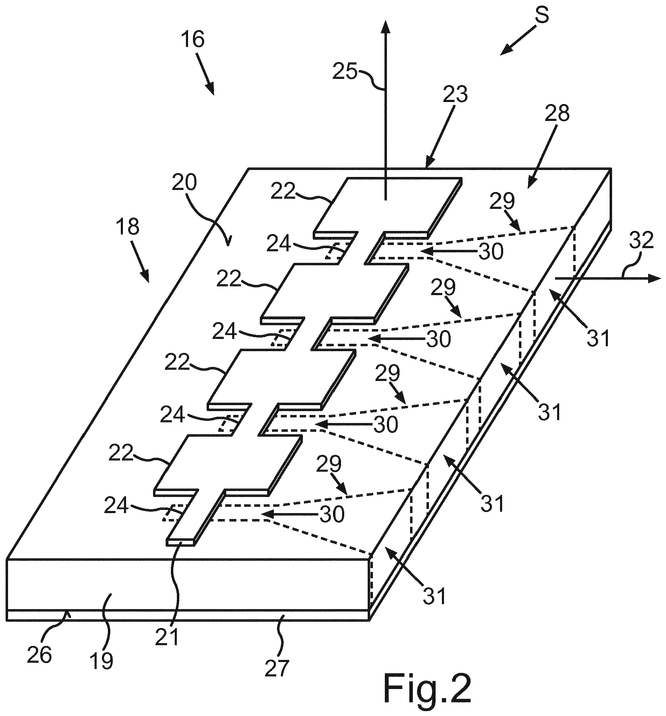

In Fig. 2 ist die Antennenvorrichtung 16 in Alleinstellung gezeigt. Die Antennenvorrichtung 16 kann auf der Grundlage einer Schaltungsplatine (PCB) oder Leiterplatte 18 bereitgestellt sein. Die Leiterplatte 18 kann in bekannter Weise ein elektrisch isolierendes Leiterplattensubstrat oder kurz Substrat 19 aufweisen, dass zum Beispiel einen faserverstärkten Kunststoff umfassen kann, zum Beispiel das Material FR-4 oder bevorzugt Ro3003.

Auf einer ersten Seite oder Vorderseite 20 kann auf der Grundlage einer elektrisch leitfähigen Schicht 21 eine Anordnung aus einem oder (wie dargestellt) mehreren Patch-Feldern 22 zum Bereitstellen einer Patch-Antenne 23 ausgestaltet sein. Zum Übertragen einer elektromagnetischen Energie oder Welle in die Patch-Felder 22 sind in der Schicht 21 des Weiteren Zuleitungen 24 vorgesehen. Die Schicht 21 kann zum Beispiel aus Kupfer oder Aluminium gebildet sein. Die Patch-Antenne 23 weist aufgrund der dargestellten Anordnung der Patch-Felder 22 eine Hauptabstrahlrichtung 25 auf, die senkrecht von der Vorderseite 20 weg gerichtet ist. Die Hauptabstrahlrichtung 25 ist in Fig. 2 nur für ein einzelnes Patch-Feld 22 veranschaulicht. Eine zweite Seite oder Rückseite 26 der Leiterplatte 18 weist ebenfalls eine elektrisch leitfähige Schicht 27 auf, die als Reflektor für die Patch-Antenne 23 fungiert. Ein Material der Schicht 27 kann dem Material der Schicht 21 entsprechen.

Bei der Antennenvorrichtung 16 ist mittels der Leiterplatte 18 zusätzlich zu der Patch-Antenne 23 eine substratintegrierte Hornantennenanordnung 28 bereitgestellt. Hierzu ist neben zumindest einem Patch-Feld 22 eine Hornantennenstruktur 29 als substratintegrierte Antennenstruktur in dem Substrat 19 ausgebildet oder ausgestaltet. Zum Einspeisen eines elektromagnetischen Energie als elektromagnetische Welle in jede Hornantennenstruktur 29 können bei der in Fig. 2 gezeigten Ausführungsform die Zuleitungen 24 genutzt werden, welche jeweils elektrisch mit einem Einspeisebereich 30 einer jeweiligen Hornantennenstruktur 29 elektrisch oder strahlungsgekoppelt verbunden sind. Eine in dem Einspeisebereich 30 eingespeiste elektromagnetische Welle wird durch eine Trichterform 31 der jeweiligen Hornantennenstruktur 29 in eine Hauptabstrahlrichtung 32 ausgerichtet und aus dem Substrat 19 abgestrahlt. Die Hauptabstrahlrichtung 32 ist in Fig. 2 lediglich für eine einzelne Hornantennenstruktur 29 veranschaulicht. Die Trichterform 31 ist zur Hauptabstrahlrichtung hin offen. Insbesondere liegt diese Öffnung an einem Rand oder an einer Kante des Substrats 19.

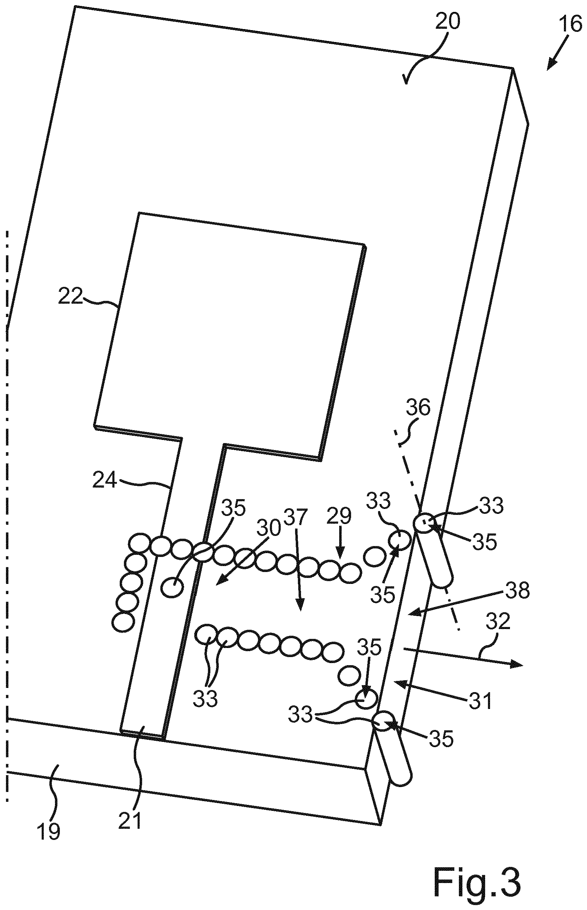

Fig. 3 veranschaulicht, wie die Trichterform 31 einer einzelnen Hornantennenstruktur 29 in dem Substrat 19 ausgestaltet oder bereitgestellt werden kann. Jede Hornantennenstruktur 29 sieht hierzu Aussparungen in Form von Löchern 33 in dem Substrat 19 vor, um einen Wellenleiter oder eine Wellenleiterstruktur nachzubilden. Der Übersichtlichkeit halber sind in Fig. 3 nur einige der Löcher mit einem Bezugszeichen versehen.

In jedem der Löcher 33 kann ein elektrisch leitfähiges Material angeordnet sein, zum Beispiel Zinn oder Kupfer oder Aluminium. Im Einspeisebereich 30 kann innerhalb der Trichterform 31 in dem Substrat 19 ein Loch 34 vorgesehen sein, in welchem elektrisch leitfähiges Material angeordnet ist, das elektrisch mit der Zuleitung 24 verbunden ist. Das elektrisch leitfähige Material 34 in den übrigen Löchern 33 ist dagegen bevorzugt elektrisch isoliert gegenüber der Zuleitung 24 und dem Patch-Feld 22.

Die Löcher 33 sind entlang ihrer jeweiligen Längserstreckungsrichtung 36 bevorzugt parallel zueinander angeordnet. Die Längserstreckungsrichtung 36 steht dabei bevorzugt senkrecht zu den Flächen der Vorderseite 20 und Rückseite 26. Die Löcher 33 können insbesondere als sogenannte VIAs in dem Substrat 19 ausgestaltet sein. Sie können beispielsweise gebohrt sein. Die Anordnung der Löcher 33 ist derart gewählt, dass sich die Trichterform 31 ergibt. Die Löcher 33 bilden einen Wellenzaun, welcher einen Ausbreitungsbereich 37 abgrenzt, der sich ausgehend vom Einspeisebereich 30 zu einer Austrittsöffnung 38 hin aufweitend ausgestaltet ist. Aus dem Austrittsbereich 38 tritt eine in der Trichterform 31 erzeugte elektromagnetische Welle in die Umgebung 14 aus.

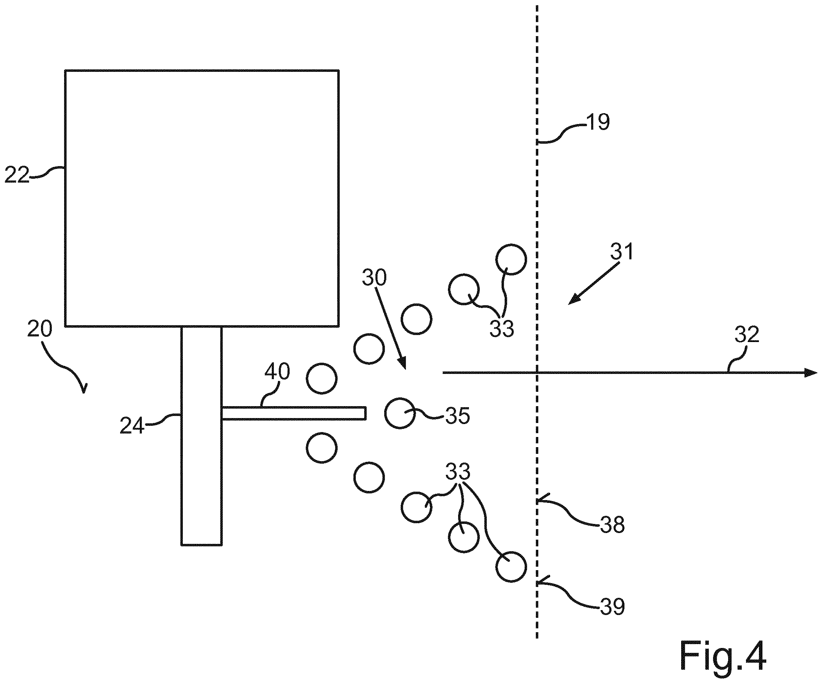

Fig. 4 zeigt eine Draufsicht auf eine alternative Ausgestaltung der Trichterform 31. Die Trichterform 31 endet an einer Kante 39 des Substrats 19 mit dem Austrittsbereich 38. Der Einspeisebereich 30 mit dem Loch 35 ist von der Zuleitung 24 beabstandet angeordnet und mit dieser galvanisch über eine Speiseleitung 40 gekoppelt. Die Kopplung zwischen der Speiseleitung 40 und dem Loch 35 kann auch rein kapazitiv, d.h. nicht-galvanisch sein.

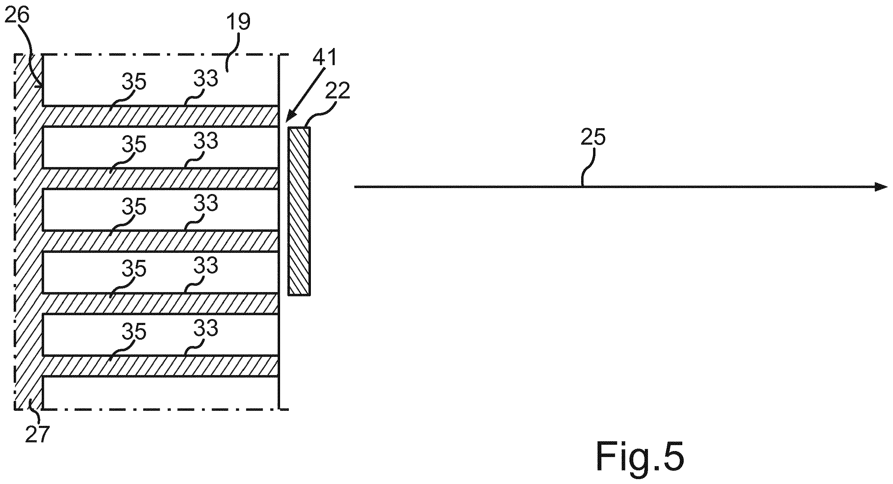

Fig. 5 veranschaulicht die Anordnung der Löcher 33 in dem Substrat 19. Dargestellt ist, wie eine elektrische Isolierung 41 zwischen der Schicht 21, insbesondere der Zuleitung 24 und dem Patch-Feld 22, einerseits und dem elektrisch leitfähigen Material 35 in den Löchern 33 vorgesehen ist. Des Weiteren ist veranschaulicht, wie auf der Rückseite 26 durch die elektrisch leitfähige Schicht 27 das elektrisch leitfähige Material 35 in den Löchern 33 elektrisch, insbesondere galvanisch, verbunden sein kann.

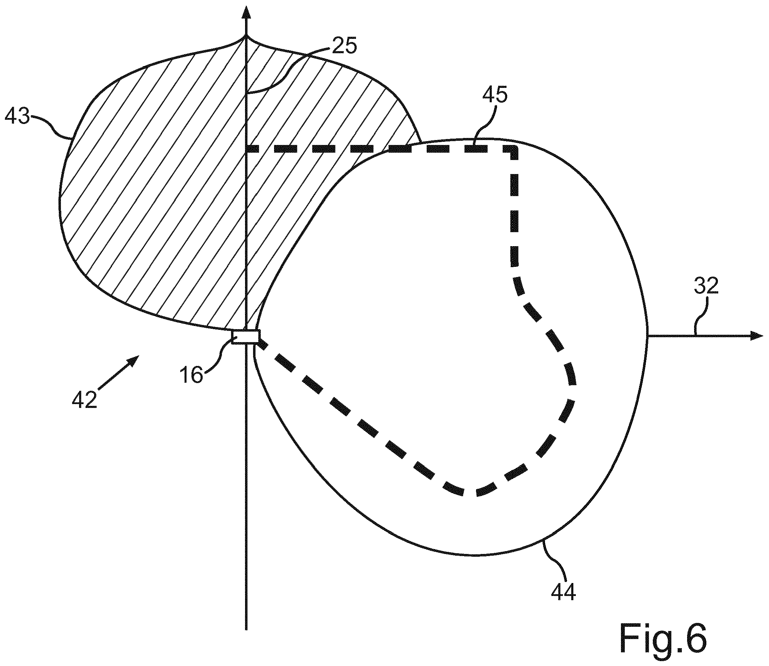

Fig. 6 veranschaulicht eine resultierende Strahlungscharakteristik oder Gesamtcharakteristik 42, die sich aus einer Strahlungscharakteristik 43 der Patch-Antenne 23 und einer Strahlungscharakteristik 44 der Hornantennenanordnung 28 ergibt. Durch Einstellen einer Anzahl der Patch-Felder 22 und der Hornantennenstrukturen 29 können die Strahlungscharakteristiken 43, 44 an eine Sollcharakteristik 45 angepasst werden.

Die gezeigten Antennenvorrichtungen sind somit jeweils eine Kombination aus einer vorwärtsgerichteten Patch-Antenne mit bekannter Strahlungscharakteristik und einer weiteren Hornantennenanordnung, wobei kein weiterer Platzbedarf auf der Leiterplatte für diese weitere Antenne benötigt wird. Dies wird erreicht durch die Kombination von Patch-Antennen 23 als klassischer vorwärtsgerichteter Flächenstrahler mit einem Substrat-integrierten Hohlleiter oder Wellenzaun, der an der Leiterplattenkante 39 zu einer Hornantennenstruktur geformt wird und bevorzugt rechtwinklig zur Antennencharakteristik der Patch-Antenne ausgerichtet ist. Damit verbreitert sich der Erfassungsbereich des Radarsensors, ohne dabei wertvollen Leiterplattenplatz zu belegen. Ob diese substratintegrierte Antenne an der rechten, linken oder an beiden Seiten in Relation zur Hauptantenne angeordnet ist, ist unerheblich und wird durch den Anwendungsfall bestimmt.

Im Fall einer Radarsensors mit großer Reichweite, wird eine typische Reihe aus Patch-Feldern, d.h. eine Patch-Antennenspalte, mit einem substrat-integrierten Hohlleiter in Form einer Hornantenne kombiniert. Indem die substrat-integrierte Hornantenne sich unterhalb der Patch-Antenne befinden kann, belegen beide Antennenstrukturen zusammen nur eine Leiterplattenfläche von einer einzelnen Antenne.

Dazu wird in einer Leiterplatte (mit Hochfrequenzsubstrat) eine klassische Patch-Antenne mit strahlendem Element auf die Vorderseite mit dem Speisenetzwerk aufgebracht. Als Reflektor wird die gegenüberliegende Seite des Substrats verwendet (doppelseitig kaschierte Leiterplatte). Zusätzlich werden Löcher 33 als Durchkontaktierungen (VIAs) zwischen Oberseite und Rückseite durch das Substrat eingebracht. Diese VIAs können innen mit Kupfer über elektrodepositorische, elektrolytische Verfahren beschichtet werden, so dass sie leitend werden.

Die Abstände und Anordnung der VIAs können derart eingestellt werden, dass sie einen Hohlleiter für 77 GHz darstellen oder nachbilden. Öffnet man einen Hohlleiter einseitig und formt die Öffnung trichterförmig aus, wird eine Hornantenne nachgebildet.

Das Speisenetzwerk der Patch-Antenne wird galvanisch direkt oder (induktiv oder kapazitiv) gekoppelt angezapft und in den nachgebildeten Hohlleiter eingekoppelt, sodass sich die Leistung auf beide Antennentypen (Patch und Horn) aufteilt. Die Verteilung kann über die Kopplungsgrade der Einkopplung gesteuert werden. Beide Antennentypen werden somit über den gleichen Speisepunkt erregt.

Durch die rechtwinklig zueinander angeordnete Antennencharakteristik, ergibt sich ein resultierendes Antennendiagramm 42 mit einem sehr breiten Erfassungsbereich. Es ergeben sich daraufhin zwei rechtwinklig zueinander ausgerichtete Strahlungsdiagramme 43, 44, eines von der Patch-Antenne und ein weiteres von der substrat-integrierten Horn-Antenne, die in Summe den gesamten gewünschten Erfassungsbereich abdecken. Die Ergebnisse der Hochfrequenzsimulation sind in Fig. 6 veranschaulicht und zeigen, dass eine Umsetzung ohne Probleme durchgeführt werden kann und sich die gewünschten Effekte der verbesserten Überwachungsbereiche in Zusammenhang mit geringeren Leiterplattenplatzbedarf einstellen.

Um die Reichweite zu erhöhen, kann man die Patch-Horn-Antennenkombination zu einer Antennenspalte S anordnen, wie in Fig. 2 veranschaulicht ist.

In Summe stehen auf gleicher Leiterplattenfläche mehr Raum für Antennen zur Verfügung, die für eine erhöhte Reichweite, verbesserte Ortsauflösung der Objekte und/oder Performancesteigerung mit lückenloser Überwachung genutzt werden kann. Ferner werden beide Antennentypen mit dem gleichen Speisepunkt erregt, was wiederum eine Reduktion des Speisenetzwerks und des Platzbedarfs führt.

Insgesamt zeigt das Beispiel, wie durch die Erfindung eine Antenne für Radaranwendung mit doppelter oder überlagerter Strahlungscharakteristik bereitgestellt werden kann.

## Patentansprüche

1. Antennenvorrichtung (16) für einen Radardetektor (11), aufweisend eine Leiterplatte (18) mit einem elektrisch isolierenden Substrat (19), an welchem an zwei gegenüberliegenden Seiten (20, 26) jeweils eine elektrisch leitfähige Schicht (21, 27) angeordnet ist, wobei die Schicht (21) zumindest einer ersten Seite (20) als zumindest eine Hauptantenne (22) ausgestaltet ist,
wobei neben der zumindest einen Hauptantenne (22) jeweils mindestens eine substratintegrierte Antennenstruktur (29) bereitgestellt ist, wobei jede substratintegrierte Antennenstruktur (29) umfasst: mehrere in dem Substrat (19) ausgebildete und zu einem Wellenleiter (31) angeordnete Aussparungen (33), in welchen jeweils zumindest abschnittsweise ein elektrisch leitfähiges Material (35) angeordnet ist, und eine durch die elektrisch leitfähige Schicht (21) einer der Seiten (20) gebildete Einspeiseleitung (24, 40) zum Einspeisen einer elektromagnetischen Welle in die substratintegrierte Antennenstruktur (29), wobei als jeweilige substratintegrierte Antennenstruktur (29) eine Hornantennenstruktur oder eine Schlitzantenne ausgeformt ist und der substratintegrierte Wellenleiter (31) der jeweiligen substratintegrierten Antennenstruktur (29) an einen Rand (39) des Substrats (19) geführt ist, **dadurch gekennzeichnet, dass**
jede Einspeiseleitung (24, 40) mit einer durch die erste Schicht (21) ausgebildeten Zuleitung (24) für die zumindest eine Hauptantenne (22) verbunden oder durch diese gebildet ist.

2. Antennenvorrichtung (16) nach Anspruch 1, wobei das in den Aussparungen (33) angeordnete Material (35) jeder Antennenstruktur (29) als ein Wellenzaun oder Wellenkäfig für über die Einspeiseleitung (24, 40) in den Wellenleiter (31) eingespeiste elektromagnetische Wellen wirkt.

3. Antennenvorrichtung (16) nach einem der vorhergehenden Ansprüche, wobei bei jeder Antennenstruktur (29) jeweils Längserstreckungsrichtungen (36) der Aussparungen (33) parallel zueinander und/oder senkrecht zu einer Erstreckungsebene der Leiterplatte (18) ausgerichtet sind.

4. Antennenvorrichtung (16) nach einem der vorhergehenden Ansprüche, wobei einige oder alle der Aussparungen (33) jeweils als VIA-Durchgangsbohrung in dem Substrat (19) bereitgestellt sind.

5. Antennenvorrichtung (16) nach einem der vorhergehenden Ansprüche, wobei das in den Aussparungen (33) angeordnete elektrisch leitfähige Material (35) über die elektrisch leitfähige Schicht (27) der ersten Seite (21) und/oder der zweiten Seite (26) elektrisch kurzgeschlossen ist.

6. Antennenvorrichtung (16) nach einem der vorhergehenden Ansprüche, wobei die elektrisch leitfähige Schicht (27) der zweiten Seite (26) als Reflektor für jede Hauptantenne (22) ausgestaltet ist.

7. Antennenvorrichtung (20) nach einem der vorhergehenden Ansprüche, wobei eine jeweilige Hauptabstrahlrichtung (25) jeder Hauptantenne (22) einerseits und eine jeweilige Hauptabstrahlrichtung (32) jeder jeweils daneben angeordneten Antennenstruktur (29) andererseits senkrecht zueinander oder zumindest in einem Winkelbereich von 70° bis 110° zueinander ausgerichtet sind.

8. Antennenvorrichtung (16) nach einem der vorhergehenden Ansprüche, wobei jede Hauptantenne (22) jeweils als eine Rechteckform ausgestaltet ist.

9. Kraftfahrzeug (10) mit zumindest einem Radardetektor (11) zum Erfassen von Objekten in einer Umgebung (14) des Kraftfahrzeugs (10) und/oder zum Erfassen von Objekten in einem Innenraum des Kraftfahrzeugs (10),
**dadurch gekennzeichnet, dass**
der zumindest eine Radardetektor (11) jeweils eine Antennenvorrichtung (16) nach einem der vorhergehenden Ansprüche aufweist.

## Claims

1. Antenna device (16) for a radar detector (11), having a circuit board (18) with an electrically insulating substrate (19), on which an electrically conductive layer (21, 27) is arranged on each of two opposing sides (20, 26), wherein the layer (21) of at least one first side (20) is configured as at least one main antenna (22),
wherein, in addition to the at least one main antenna (22), in each case at least one antenna structure (29) integrated with the substrate is provided, wherein each antenna structure (29) integrated with the substrate comprises: a plurality of cutouts (33) which are formed in the substrate (19) and arranged in a waveguide (31) and in each of which an electrically conductive material (35) is arranged at least partially, and a feeder cable (24, 40) formed by the electrically conductive layer (21) of one of the sides (20) for feeding an electromagnetic wave into the antenna structure (29) integrated with the substrate, wherein a horn antenna structure or a slit antenna is designed as the respective antenna structure (29) integrated with the substrate, and the waveguide (31) integrated with the substrate of the respective antenna structure (29) integrated with the substrate is guided to an edge (39) of the substrate (19), **characterised in that** each feeder cable (24, 40) is connected with or formed by a supply line (24) for the at least one main antenna (22), said supply line being formed by the first layer (21).

2. Antenna device (16) according to claim 1, wherein the material (35) of each antenna structure (29) arranged in the cutouts (33) acts as a wave fence or wave cage for electromagnetic waves fed into the waveguide (31) by means of the feeder cable (24, 40).

3. Antenna device (16) according to any of the preceding claims, wherein in each antenna structure (29) respective longitudinal extension directions (36) of the cutouts (33) are oriented parallel to each other and/or perpendicularly to an extension plane of the circuit board (18).

4. Antenna device (16) according to any of the preceding claims, wherein at least some or all of the cutouts (33) are respectively provided as VIA through-holes in the substrate (19).

5. Antenna device (16) according to any of the preceding claims, wherein the electrically conductive material (35) arranged in the cutouts (33) is electrically shortcircuited by means of the electrically conductive layer (27) of the first side (21) and/or the second side (26).

6. Antenna device (16) according to any of the preceding claims, wherein the electrically conductive layer (27) of the second side (26) is designed as a reflector for each main antenna (22).

7. Antenna device (20) according to any of the preceding claims, wherein a respective main radiation direction (25) of each main antenna (22) and a respective main radiation direction (32) of each antenna structure (29) arranged respectively adjacent thereto are oriented perpendicularly to each other or at least in an angular range of 70° to 110° with respect to each other.

8. Antenna device (16) according to any of the preceding claims, wherein each main antenna (22) is respectively designed as a rectangular shape.

9. Motor vehicle (10) having at least one radar detector (11) for detecting objects in an environment (14) of the motor vehicle (10) and/or for detecting objects in an interior of the motor vehicle (10),
**characterised in that**
the at least one radar detector (11) respectively has an antenna device (16) according to any of the preceding claims.

## Revendications

1. Dispositif d'antenne (16) pour un détecteur de radar (11), comprenant une carte de circuit imprimé (18) ayant un substrat électriquement isolé (19) sur lequel une couche électroconductrice (21, 27) est disposée sur chacune de deux faces opposées (20, 26), la couche (21) d'au moins une première face (20) étant conçue au moins en tant qu'antenne principale (22), dans laquelle en plus de l'au moins une antenne principale (22) au moins une structure d'antenne intégrée au substrat (29) est prévue, chaque structure d'antenne intégrée au substrat (29) comprenant : une pluralité d'évidements (33) formés dans le substrat (19) et agencés pour former un guide d'ondes (31), dans chacun desquels un matériau électroconducteur (35) est disposé au moins en sections, et une ligne d'injection (24, 40) formée par la couche électroconductrice (21) de l'une des faces (20) pour alimenter une onde électromagnétique dans la structure d'antenne intégrée au substrat (29), une structure d'antenne cône ou une antenne à fentes étant formée comme structure d'antenne intégrée au substrat respective (29), et le guide d'ondes intégré au substrat (31) de la structure d'antenne intégrée au substrat respective (29) étant guidé vers un bord (39) du substrat (19), **caractérisé en ce que** chaque ligne d'injection (24, 40) est reliée à ou formée par une alimentation (24) formée par la première couche (21) pour l'au moins une antenne principale (22).

2. Dispositif d'antenne (16) selon la revendication 1, dans lequel le matériau (35) de chaque structure d'antenne (29) agencé dans les évidements (33) agit comme une barrière à ondes ou une cage à ondes pour les ondes électromagnétiques introduites dans le guide d'ondes (31) par l'intermédiaire de la ligne d'injection (24, 40).

3. Dispositif d'antenne (16) selon l'une quelconque des revendications précédentes, dans lequel dans chaque structure d'antenne (29), les directions d'extension longitudinale respectives (36) des évidements (33) sont alignées parallèlement les unes aux autres et/ou perpendiculairement à un plan d'extension de la carte de circuit imprimé (18).

4. Dispositif d'antenne (16) selon l'une quelconque des revendications précédentes, dans lequel certains ou tous les évidements (33) sont chacun prévus comme un alésage traversant VIA dans le substrat (19).

5. Dispositif d'antenne (16) selon l'une quelconque des revendications précédentes, dans lequel le matériau électroconducteur (35) disposé dans les évidements (33) est court-circuité électriquement par la couche électroconductrice (27) de la première face (21) et/ou de la deuxième face (26).

6. Dispositif d'antenne (16) selon l'une quelconque des revendications précédentes, dans lequel la couche électroconductrice (27) de la deuxième face (26) est conçue comme un réflecteur pour chaque antenne principale (22).

7. Dispositif d'antenne (20) selon l'une quelconque des revendications précédentes, dans lequel une direction de rayonnement principale respective (25) de chaque antenne principale (22) d'une part et une direction de rayonnement principale respective (32) de chaque structure d'antenne (29) disposée respectivement à côté de celle-ci d'autre part sont alignées perpendiculairement l'une à l'autre ou au moins dans une plage angulaire de 70° à 110° l'une à l'autre.

8. Dispositif d'antenne (16) selon l'une des revendications précédentes, dans lequel chaque antenne principale (22) est conçue respectivement comme une forme rectangulaire.

9. Véhicule à moteur (10) avec au moins un détecteur radar (11) pour détecter des objets dans un environnement (14) du véhicule à moteur (10) et/ou pour détecter des objets dans un habitacle du véhicule à moteur (10),
**caractérisé en ce que**
l'au moins un détecteur de radar (11) présente chacun un dispositif d'antenne (16) selon l'une quelconque des revendications précédentes.
